# EUROPÄISCHE PATENTSCHRIFT

(11) **EP 0 717 130 B1**
(45) Veröffentlichungstag und Bekanntmachung des Hinweises auf die Patenterteilung: **08.04.1998**
(21) Anmeldenummer: 95118755.8
(22) Anmeldetag: 29.11.1995
(51) Int. Cl.: C25B 11/03, C25B 9/00, H01M 4/86, C25B 15/08

(54) **Druckkompensierte elektrochemische Zelle**
Pressure compensated electrochemical cell
Cellule électrochimique à compensation de pression

(30) Priorität: 12.12.1994 DE 4444114
(43) Veröffentlichungstag der Anmeldung: 19.06.1996
(73) Patentinhaber: BAYER AG, 51368 Leverkusen (DE)
(72) Erfinder: Gestermann, Fritz, Dr., D-51377 Leverkusen (DE); Pinter, Hans-Dieter, D-42929 Wermelskirchen (DE)

(56) Entgegenhaltungen:
- EP-A- 0 248 433
- EP-A- 0 599 363
- WO-A-85/01072

## Beschreibung

Der Einsatz von Gasdiffusionselektroden bei unterschiedlichsten Elektrolysevorgängen ermöglicht vielfach alternative Reaktionswege bzw. hilft unerwünschte oder unwirtschaftliche Nebenprodukte einer Elektrolyse zu vermeiden. In der Alkali-Halogenid-Elektrolyse z.B. ist der Wasserstoff ein unerwünschtes Nebenprodukt, der als Zwangsanfallprodukt häufig nicht sinnvoll verwendet werden kann. Darüber hinaus ist die Energiewertigkeit des Wasserstoffs im Elektrolyseprozeß in der Regel erheblich höher als der üblicherweise für Wasserstoff zu erzielende Verkaufserlös. Es erscheint deshalb sinnvoll, den elektrochemisch als Nebenprodukt gebildeten Wasserstoff elektrochemisch weiter zu verwenden oder über eine alternative Reaktionsführung ganz zu vermeiden.

Bei der elektrochemischen Weiterverwendung des Wasserstoffs bietet sich der Einsatz in Brennstoffzellen an. Ein interessanter Weg wird im US-Patent 46 47 351 beschrieben. Dort wird vorgeschlagen den Wasserstoff dadurch abzufangen, daß alkalische Brennstoffzellen an den Elektrolyseprozeß gekoppelt werden. Hierbei wird die Lauge aus dem Kathodenraum der Elektrolyse in die Anoden- und Kathodenkammern der Brennstoffzelle eingeleitet, im Kathodenraum angereichert und abgegeben bzw. im Anodenraum abgereichert und in die Elektrolyse zurückgespeist. Nachteilig bei diesem Verfahren sind der hohe apparative Aufwand, die zusätzlichen Energieverluste bei der Wasserstoffbildung und der anschließenden Oxidation in der Brennstoffzelle sowie die elektrischen Leitungsverluste und die Problematik der unmittelbaren Nutzung des Gleichstroms aus den Brennstoffzellen für die Elektrolyse aufgrund der gegenläufigen Strom-Spannungskennlinien.

Ein alternativer Weg ist die Vermeidung der Wasserstoffbildung an der Elektrolysekathode durch Sauerstoffreduktion an einer Sauerstoffverzehrkathode. Hierdurch werden beispielsweise bei der Alkali-Hydroxid-Elektrolyse - ganz analog zur üblichen Verfahrensweise mit Wasserstoffbildung - Hydroxid-Ionen an der Kathode gebildet, die die Einwanderung von Alkali-Ionen durch eine Kationen-selektive Membran in den Kathodenraum anregen und dort zur Bildung von Alkali-Hydroxid-Lösung führen. Die Bildung der Zielprodukte Halogen und Alkali-Hydroxid-Lösung wird hierdurch nicht beeinflußt, wohl aber der Verbrauch an elektrischer Energie, der erheblich zurückgeht. Über Sauerstoffverzehrkathoden in der Alkali-Halogenid-Elektrolyse sind in der Vergangenheit eine Reihe von Arbeiten durchgeführt worden. Als generelles Problem hat sich dabei folgendes herausgestellt:

Die Gasdiffusionskathode, im Falle der Alkali-Halogenid-Elektrolyse z.B. als Sauerstoffverzehrkathode betrieben, ist eine offenporige Membran zwischen Elektrolyt und Gasraum, die es erlauben soll, daß die Sauerstoffreduktion an der Dreiphasengrenze zwischen Elektrolyt, Katalysator und Sauerstoff möglichst nahe zum Elektrolyten hin erfolgt. Diese Grenzschicht wird durch die Hydrophobie des Kathodenmaterials stabilisiert. Es zeigt sich jedoch, daß diese Stabilisierung, die alleine durch die Oberflächenspannung des Elektrolyten erfolgt, nur ein endliches Druckgefälle zwischen Gasseite und Flüssigkeitsseite zuläßt. Ist der gasseitige Druck zu hoch, so bricht schließlich das Gas durch die Membran durch und die Elektrode wird in diesem Bereich in ihrer Funktion gestört und der Elektrolysevorgang wird unterbrochen. Ist andererseits der Flüssigkeitsdruck zu hoch, so wird die Dreiphasengrenze aus dem Katalysatorbereich in der Membran gedrückt, was die Funktion der Kathode ebenfalls stört und bei weiterer Druckerhöhung zu einem Flüssigkeitsdurchbruch von Elektrolyt in den Gasraum führt. Bei senkrechter Elektrodenanordnung, wie bei Membranelektrolysen notwendig, um das Zielprodukt Chlor günstig abführen zu können, führt dies zu einer Begrenzung der Bauhöhe der Gasdiffusionselektroden, da sonst oben Gas in den Kathodenraum sowie unten Flüssigkeit in den Gasraum durchdrückt. Die technisch realisierbare Bauhöhe bleibt deshalb auf ca. 20 cm beschränkt, was für die heute marktüblichen Membranelektrolyseure unattraktiv ist.

Zur Behebung dieses Nachteils sind einige Verfahrensvorschläge beschrieben worden, von denen sich jedoch keiner durchsetzen konnte. In der Offenlegungsschrift DE 34 01 636 A1 beispielsweise wird das Problem des hydrostatischen Drucks umgangen dadurch, daß der Elektrolyt in einem Fallfilmapparat zwischen der kationentauschenden Membran und der Gasdiffusionselektrode herabfließt. Hierdurch wird ein weitgehend isobarer Zustand zwischen Elektrolytraum und Gasraum erzielt. Probleme bei Dauertests (z.B. Benetzungsprobleme und Blasenbildung zwischen den Membranen) haben jedoch zur Aufgabe dieses Verfahrens für Elektrolysezwecke geführt.

In der Offenlegungsschrift DE 34 39 265 A1 wird zur Vermeidung der Differenzdruckproblematik eine liegende Zellenanordnung vorgeschlagen, wobei die Elektrolytströme waagerecht geführt werden. Diese Anordnung hat sich ebenfalls nicht durchsetzen können, da einerseits in der Zelle gebildetes Gas nur schwer abgeleitet werden kann und andererseits eine Zwangsströmung zur Erneuerung des Elektrolyten bei dieser Anordnung kaum möglich ist.

Ein technisch aufwendiger Alternativvorschlag wird im US-Patent 46 57 651 offenbart. Hier wird der Druckausgleich dadurch erzielt, daß die Kathode in einzelne horizontale Kammern unterteilt wird, die individuell mit Gas beaufschlagt werden, wobei der Gasdruck durch Tauchung des jeweils abgehenden Gasstromes in vertikale Kammern dadurch geregelt ist, daß deren Tiefe der Elektrolythöhe über der jeweiligen Kammer entspricht. Nachteilig ist hier der hohe apparative Aufwand, der einer technischen Realisierung im Wege steht. Der Druck in jeder einzelnen Gaskammer soll hier nämlich separat eingestellt werden, über jeweilige Ventile.

Ein weiteres Verfahren nach dem US-Patent 45 78 159 sieht vor, daß der Katalysator zur Sauerstoffreduktion unmittelbar auf die kationenaustauschende Membran aufgebracht wird. Die durch Sauerstoffreduktion gebildeten Hydroxidionen bilden mit den mit Hydrathülle durch die Membran wandernden Alkali-Ionen wäßrige Alkali-Hydroxid-Lösung, die an der gasseitigen Oberfläche einer hydrophil mit dem Katalysator beschichteten Membran abläuft und gesammelt wird. Nachteilig ist hierbei, daß die zum Gasraum liegende Dreiphasengrenzschicht durch die gasseitig ablaufende wäßrige Alkali-Hydroxid-Lösung gestört werden kann, so daß eine höhere Betriebsspannung für die Elektrolyse hingenommen werden muß.

Aufgabe der Erfindung war es, eine elektrochemische Halbzelle bereitzustellen, die die Nachteile der genannten Vorrichtungen nicht aufweist und insbesondere den Einsatz einer Gasdiffusionselektrode in einer vertikalen Anordnung der Zelle ermöglicht, wobei der hydrostatische Druck des Elektrolyten auf die Elektrode auf einfache Weise kompensiert wird.

Die Aufgabe wird erfindungsgemäß gelöst durch eine elektrochemische Halbzelle, bestehend wenigstens aus einem Elektrodenraum zur Aufnahme eines Elektrolyten, eines Gasraums und mindestens einer Gasraum und Elektrodenraum trennenden Gasdiffusionselektrode als Anode oder Kathode, dadurch gekennzeichnet, daß der Gasraum in zwei oder mehrere kaskadenartig übereinanderliegende Gastaschen aufgeteilt ist, die voneinander getrennt sind und zum Elektrolyten nach unten hin offen sind, so daß der Druck in jeder Gastasche über die Öffnung zum Elektrolyten im Gleichgewicht zum Druck der Flüssigkeitssäule des Elektrolyten im entsprechenden Teil des vor der Gasdiffusionselektrode liegenden Elektrodenraums steht, und bei denen eine eventuelle Gaszu- oder Gasabfuhr über die Öffnungen zum Elektrolyten erfolgt, wobei wenigstens ab der zweiten untersten Gastasche die Öffnungen mit Gassammelschürzen zur Aufnahme der im Elektrolyten aufsteigenden Gasblasen verbunden sind.

Die Gastaschen stehen bevorzugt über den Elektrolyten jeweils im hydrostatischen Gleichgewicht zum entsprechenden Elektrodenraum auf der anderen Seite der Gasdiffusionselektrode.

Bevorzugt werden die Gastaschen auf ihrer Rückseite von sogenannten Gasleitblechen begrenzt, die ihrerseits unterhalb der eigentlichen Gastasche in Gassammelschürzen als Öffnungen zum Elektrolyten auslaufen, wobei die Gassammelschürzen zur Aufnahme der im Elektrolyten aufsteigenden Gasblasen dienen und diese das Elektrodengas der nächst höherliegenden Gastasche zuleiten.

Insbesondere werden die Gassammelschürzen in der Halbzelle bis dicht vor die Rückwand der elektrochemischen Zelle geführt, z.B. um einen Gasblasen-Bypass zu vermeiden, andererseits jedoch einen hydrostatischen Druckausgleich im rückwärtigen, mit Elektrolyt gefüllten Raum zu erreichen.

Die Gassammelschürzen weisen bevorzugt Gasdurchtrittsöffnungen auf, z.B. definierte Löcher oder Schlitze, unterhalb der Unterkante der jeweiligen Gastaschen bzw. im oberen Bereich der Gassammelschürze, welche für eine kontrollierte Abgabe von Überschußgas an die nächst höhergelegene Gastasche sorgen. Der Abstand der Gasdurchtrittsöffnungen von der Unterkante der jeweiligen Gastasche beeinflußt den Differenzdruck über der Gasdiffusionselektrode.

Die Gasdurchtrittsöffnungen sind vorzugsweise von Gastasche zu Gastasche gegeneinander seitlich versetzt angeordnet, so daß aufsteigende Gasblasen immer auf Schürzenbereiche ohne Gasdurchtrittsöffnungen treffen.

Besonders bevorzugt sind Ausführungsformen mit Gruppen von nebeneinander liegenden Gasdurchtrittsöffnungen, über denen in der nächsthöheren Schürze ganze Bereiche ohne Gasdurchtrittsöffnungen liegen. Im Extremfall kann die jeweilige Schürze an einer Seite mit Durchtrittslöchern und im genannten übrigen Bereich ohne Durchtrittslöcher versehen werden. Bei der jeweils nächst höheren Schürze ist dann die Anordnung von Bereichen mit Löchern und Bereichen ohne Löcher genau umgekehrt gewählt.

Durch die räumliche Trennung der Funktion an "Sammeln" und Einleiten in die Gastasche von den Funktionen Abgabe und Weiterleiten der Einsatzgase an die nächsthöhere Gastasche stellt sich im Gasraum der Gastasche eine Konvektion ein, die eine Anreicherung nicht umsetzbarer Gasanteile in der Gastasche zu verhindern hilft. Ein Zwickel zwischen Schürze und Gasleitblech kann zur Verstärkung der Trennung von Einleitung und Abgabe dienen, um die Gaskonvektion in den Gastaschen zu erzwingen.

Zur zusätzlichen Kompensation des Druckverlustes im durchströmten Elektrolytspalt können die genannten Löcher bzw. Schlitze auch anders als in gleicher Höhe relativ zur darüberliegenden Gastasche angebracht werden. Sie können vielmehr (zur zusätzlichen Kompensation des hydraulischen Druckverlustes im engen, gegebenenfalls mit einem Abstandhalter gefüllten Elektrodenraum) in der untersten Schürze am tiefsten und gestaffelt an den Schürzen der nächst höheren Gastaschen entsprechend höher angebracht werden, dergestalt, daß immer die gleichen Differenzdruckverhältnisse im jeweiligen Gasraum realisiert werden.

Eine zusätzliche Kompensation des Druckverlustes wird insbesondere dadurch möglich, daß der Durchmesser der Gasdurchtrittsöffnungen von Gastasche zu Gastasche dergestalt variiert wird, daß der Durchmesser der Öffnungen bei jeweils gleicher relativer Höhe in der Gassammelschürze von unten nach oben zu oder abnimmt, bevorzugt zunimmt.

Die Gassammelschürze der untersten Gastasche wird insbesondere als Siphon ausgeführt (z.B. ein umgeformter Blechstreifen) der es ermöglicht, daß die Druckkompensation ungestört von in die Halbzelle einströmendem Elektrolyten erfolgen kann und damit auch ungestört von der Hauptströmung zwischen Gasdiffusionselektrode und Ionenaustauschermembran.

Eine bevorzugte Variante der erfindungsgemäßen Halbzelle ist dadurch gekennzeichnet, daß die Gaseinleitung von den Gassammelschürzen in die Gastaschen durch schmale Schlitze erfolgt, die gegebenenfalls zur Verbesserung der niederohmigen Stromverbindung zwischen Halterung der Gastasche und rückwärtiger Stromzuführung durch metallisch leitende Verbindungen unterbrochen werden.

Die Schlitze sind bevorzugt so angeordnet, daß Elektrolytspray von den am Gasmeniskus unter der Gassammelschürze zerplatzenden Gasblasen nicht unmittelbar auf die Rückseite der Gasdiffusionselektrode gelangen kann. Gegebenenfalls wird die Elektrodenrückseite gegen die Gaseinleitung mit einer Blende abgedeckt um eine Kontaminierung der Elektrode im Gasraum zu vermeiden.

Die Höhe der jeweiligen Gastasche beträgt vorzugsweise von 1 bis 50 cm, insbesondere vorzugsweise von 5 bis 30 cm.

Die Halbzelle wird bevorzugt über eine einzige Gaszuführung in die unterste Gastasche mit Elektrodengas bespeist, der jeweilige Gasüberschuß wird dabei von Gastasche zu Gastasche von unten nach oben weitergegeben und der hinter der letzten Gastasche verbleibende Gasüberschuß wird am Kopf der Zelle nach außen abgegeben.

Das Elektrodengas kann in einer Variante der Zelle in die unterste Gastasche koaxial über einen gemeinsamen Stutzen mit der Elektrolytzuführung in den Elektrodenraum zugeführt werden, während Überschußgas zusammen mit dem Elektrolyten abgeführt wird.

Bei der Verwendung mehrerer Elektrodensegmente als Gasdiffusionselektrode erfolgt die Halterung der Gasdiffusionselektrodensegmente gasdicht gegenüber dem Elektrodenraum.

Die Halteelemente für die Gasdiffusionselektrode können z.B. als Klemmleisten bzw. Magnetleisten ausgebildet sein, die zunächst als Montagehilfe dienen.

Die Halteelemente können sich bei Elektrolysezellen mit zwischenliegender Ionenaustauschermembran nach dem Zusammenbau über die Ionenaustauschermembran an der dahinter aufliegenden Gegenelektrodenstruktur abstützen und so für eine entsprechende Anpressung an die Gasdiffusionselektrode sorgen.

Die Halteelemente können bei einer Elektrolysezelle an ihrer Ionenaustauschermembran zugewandten Seite in Strömungsrichtung liegende Einkerbungen tragen, die auch im verspannten Zustand der Zellen einen homogenen Elektrolytdurchtritt von Abteil zu Abteil des Elektrodenraums erlauben.

Ein elastischer Abstandhalter füllt in einer besonders bevorzugten Anordnung den schmalen Elektrodenraum aus, der nicht nur die Abstandhalter- und Turbulenzpromotorenfunktion erfüllt, sondern über die genannten Halteelemente gelegt werden kann, mit diesen zusammen verspannt wird und dadurch eine weitere elastische Komponente für die Anpressung und Abdichtung der Gasdiffusionselektroden darstellt.

In einer bevorzugten Variante der erfindungsgemäßen Halbzelle erfolgt die Halterung der Gasdiffusionselektrodensegmente mit Hilfe einer T-förmigen Halteleiste, deren langer Schenkel in geeigneten Abschnitten in Laschen ausläuft, die dergestalt durch die niederohmige Stromzuführung gesteckt werden, daß ein rückwärtiges Anziehen, z.B. über Spannkeile, die durch geeignet angebrachte Bohrungen getrieben werden, erfolgen kann. Über die kurzen Schenkel der T-förmigen Halteleiste werden so Gasdiffusionselektrode und gegebenenfalls Dichtung derart auf die niederohmige Stromzuführung gepreßt, daß sowohl Gasdichtigkeit wie auch guter Stromkontakt gewährleistet sind.

Die Stromzuführung zur Gasdiffusionselektrode erfolgt bevorzugt über deren Haltevorrichtung, die wiederum niederohmig mit der Rückseite der Zelle zur externen Stromquelle verbunden ist, wobei zwischen den Haltevorrichtungen eine metallische Gitterstruktur, an der elektrolytseitig die Gasdiffusionselektrode anliegt, für kurze Stromwege sorgt. Für den Fall einer Gasdiffusionselektrode mit integriertem metallischem Gitter kann gegebenenfalls auf die gesonderte metallische Gitterstruktur zwischen den Haltevorrichtungen verzichtet werden.

Insbesondere wird die niederohmige Verbindung zur Rückseite der Zelle mit Durchbrüchen bzw. Löchern versehen, die einerseits einen hydrostatischen Druckausgleich des Elektrolyten im Rückraum und andererseits eine Passage der weitergeleiteten Gasblasen ermöglicht.

Die unterste niederohmige Verbindung zur Rückseite der Zelle enthält insbesondere eine kleine Ausgleichsbohrung, die eine Elektrolytdurchmischung im Rückraum ermöglicht, ohne eine gezielte Hauptströmung des Elektrolyten durch den Elektrodenraum nennenswert zu beeinflussen.

Eine vorteilhafte Ausführungsform der erfindungsgemäßen Halbzelle ist dadurch gekennzeichnet, daß die gesamte Struktur der Gastaschenelektrode aus der Elektrolysehalbzelle herausnehmbar gestaltet wird.

Insbesondere ist bevorzugt, daß die Gasdiffusionselektroden ausgewechselt werden können, wobei alle übrigen Strukturen der Gastaschenelektrode weiter betrieben werden können.

Eine bevorzugte Form der erfindungsgemäßen Halbzelle dient als Sauerstoffverzehrkathode, z.B. bei der Chlor-Alkalielektrolyse. Der dabei notwendige Sauerstoff wird in waagerechten Gastaschen angeboten, deren jeweilige Höhe von der Differenzdruckbelastbarkeit der Gasdiffusionselektrode bestimmt ist. Die Gastaschen werden hierbei gebildet aus der Elektrode, einem rückseitigen Leitblech mit geeigneten Gasdurchtrittsbohrungen und Gasblasensammelschürzen sowie einer umseitigen Haltestruktur für die Gasdiffusionselektrode, welche gleichzeitig die Stromverteilfunktion übernehmen kann. Die Bespeisung mit Sauerstoff erfolgt in die unterste Gastasche. Hier nicht umgesetzter Sauerstoff perlt über geeignete Bohrungen im unteren Bereich des rückseitigen Leitbleches in die dort anstehende Elektrolytflüssigkeit, vorzugsweise den gleichen Elektrolyten wie in der Kathodenkammer, wird von der Gasblasensammelschürze der nächsthöheren Gastasche aufgefangen und füllt diese ebenfalls. Dieser Vorgang wiederholt sich bis zur obersten Gastasche, wobei in jeder Sauerstoffverzehrkathode Teile des Sauerstoffs verbraucht werden. Die Bespeisung der untersten Gastasche wird so eingestellt, daß die oberste Gastasche immer noch einen Überschuß an Sauerstoff abgibt, so daß sichergestellt ist, daß alle Sauerstoffverzehrkathoden im Überschuß mit Sauerstoff versorgt sind. Nicht umgesetzter Sauerstoff kann aufgefangen und unten wieder zugespeist werden.

Im Bereich jeder Gastasche stellt sich ein Gasdruck ein, der der Flüssigkeitssäule von der Unterkante des Blasenmeniskus bis zur Oberkante der Flüssigkeitssäule zwischen Gastaschenkaskade und Rückwand der Elektrolysezelle entspricht. Dieser Druck wird kompensiert von der Flüssigkeitssäule in der Elektrodenkammer, wobei das Gleichgewicht bei gleicher Füllhöhe in beiden Kammern (z.B. bei hydraulischer Verbindung beider Kammern) an der Unterkante des vorgenannten Blasenmeniskus liegt. Da in der jeweiligen Gastasche homogener Druck herrscht, steht im Mittel ein leichter Überdruck gasseitig an, was im Sinne einer optimalen Funktion, z.B. der katalytischen Sauerstoffreduktion, auch wünschenswert ist.

Trennt man in einer weiteren bevorzugten Variante der erfindungsgemäßen Halbzelle den Elektrodenraum und den rückwärtigen Elektrolytraum hydraulisch, kann der jeweilige Differenzdruck, der ja für alle Kammern gleich ist, durch unterschiedlichen Füllstand oder Ablaufhöhe in beiden Räumen gezielt eingestellt werden.

So kann z.B. durch gesonderte Gasabfuhr über ein oben herausgeführtes Rohr zur Gasableitung und eine gegebenenfalls vorzusehende darüberliegende Elektrolytvorlage ein steuerbarer Überdruck eingestellt werden, der dann für alle Gastaschen gleich hoch gegenüber dem Elektrodenraum ist.

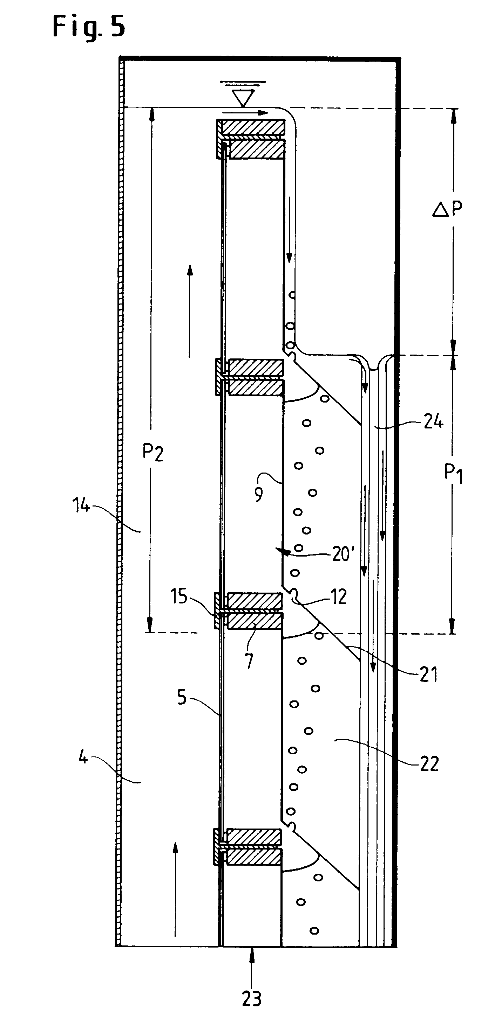

Wird hingegen der Elektrolytablauf der Zelle bevorzugt über ein Standrohr nach unten herausgeführt, wie z.B. in Fig. 5 dargestellt, oder auch gegebenenfalls zu einer Seitenwand der Zelle, ist es unmittelbar möglich, Elektrolyt und Überschußgas gemeinsam abzuleiten, indem man den Elektrolyten aus dem Elektrodenraum ausschließlich oben über die Gastaschenelektrode in den rückwärtigen Elektrolytraum fließen laßt, von wo er über das Standrohr gemeinsam mit dem überschüssigen Sauerstoff aus der Zelle nach unten oder bei einem seitlichen Ablauf auch zur Seite austritt. Unterschiedliche Höhen des Standrohres führen zu unterschiedlichen Differenzdrucken, wobei diesmal der Flüssigkeitsdruck höher ist als der Gasdruck, was insbesondere für ein vollflächiges Anliegen tuchartiger Gasdiffusionselektroden auf dem Stromverteilergitter von Vorteil ist. Gegebenenfalls kann dann nämlich auf Halte- und Klemmvorrichtungen für die Elektrode verzichtet werden. Ganz analog zur gemeinsamen Abfuhr von Elektrolyt und Überschußgas über das Standrohr kann dies auch über ein seitlich an der Halbzelle angebrachtes Ableitrohr erfolgen, wobei die Trennung von Gas und Elektrolyt, z.B. in einem Sammler neben der Zelle erfolgt. Und auf diese Weise kann der Flüssigkeitsdruck höher als der Gasdruck über der Gasdiffusionselektrode eingestellt werden.

Die erfindungsgemäße Halbzelle kann durch entsprechende Anzahl von Gastaschen auf beliebige technisch sinnvolle Größen erweitert werden. Da die benötigte Gasmenge (z.B. Sauerstoff) für repräsentative Elektrolyselasten beispielsweise bei 0,7 bis 1 Normkubikmeter pro Quadratmeter Kathodenfläche und Stunde liegt, ist durch geeignete Verteilung der Blasenöffnungen ohne Probleme der notwendige Gastransport zu bewerkstelligen, wie hydraulische Versuche gezeigt haben.

Mit der erfindungsgemäßen Halbzelle lassen sich prinzipiell die üblichen marktgängigen Membranelektrolyseure zur Elektrolyse von Alkali-Halogenid-Lösungen, sofern sie eine genügend tiefe Kathodenkammer besitzen, auf den energiesparenden Betrieb mit z.B. Sauerstoffverzehrkathoden umstellen.

Weitere potentielle Anwendungsgebiete für die erfindungsgemäße Halbzelle sind beispielsweise
- Natriumdichromatelektrolyse. Hier ist statt der Sauerstoff-produzierenden eine Wasserstoff-verzehrende Anode möglich; die Wasserstoffproduktion an der Kathode kann durch Sauerstoffreduktion an einer Sauerstoffverzehrkathode ersetzt werden.
- Wasserstoff-Peroxid-Produktion über Sauerstoff-Reduktion an einer Gasdiffusionskathode.
- Alkalische Brennstoffzellen, die wie eingangs beschrieben, zur Natronlaugeanreicherung eingesetzt werden. Hier kann mit Halbzellen entsprechend der Erfindung als Anode zur Wasserstoffumsetzung und als Kathode mit Sauerstoffreduktion gearbeitet werden.

Die Halbzelle gemäß der Erfindung läßt sich grundsätzlich überall dort einsetzen, wo eine Gasdiffusionselektrode in unmittelbarem Kontakt mit flüssigen Elektrolyten betrieben wird.

Für die erfindungsgemäße Halbzelle können alle grundsätzlich bekannten Typen von Gasdiffusionselektroden eingesetzt werden, z.B. Typen mit integriertem metallischen Stütz- bzw. Stromverteilergitter oder auf Kohlenstoffvliesen aufgebaute Elektroden. Weitere bevorzugte Ausführungsformen der erfindungsgemäßen Halbzelle sind den Unteransprüchen zu entnehmen.

Die Erfindung wird nachstehend anhand der Figuren beispielhaft näher erläutert. In den Figuren zeigen:

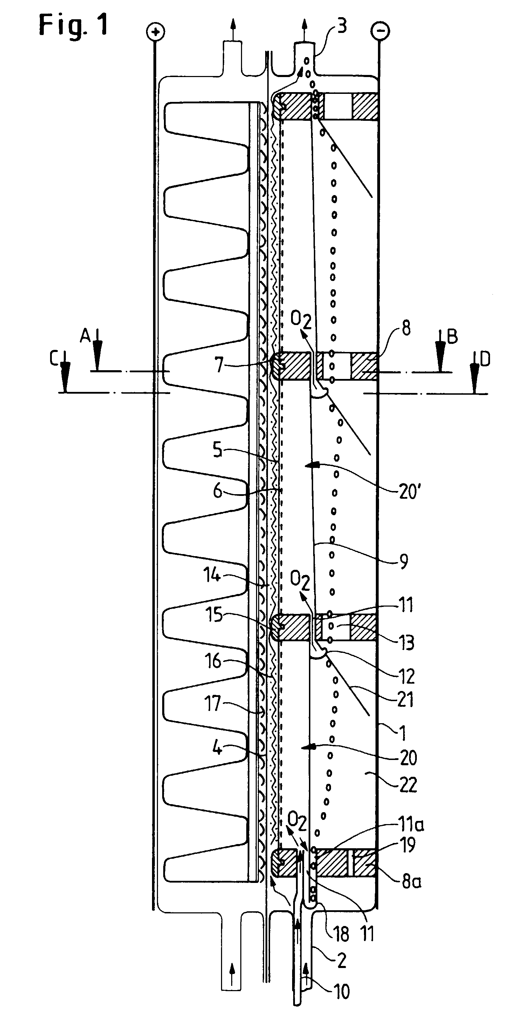

- Fig. 1: den prinzipiellen Aufbau einer hier als Sauerstoffverzehrkathode geschalteten Halbzelle als Teil eines Chloralkalielektrolyseurs
- Fig. 2: den schematischen Schnitt durch den Elektrolyseur entsprechend Linie A-B in Fig. 1
- Fig. 3: den schematischen Schnitt durch den Elektrolyseur entsprechend der Linie C-D in Fig. 2
- Fig. 4: das Schema einer grundsätzlichen Anordnung der Gastaschen für eine erfindungsgemäße Halbzelle.
- Fig. 5: das Schema einer Halbzelle mit einstellbarem Differenzdruck.

In der Halbzelle 1 mit einem Elektrolytzulaufstutzen 2 und dem Elektrolytablaufstutzen 3, die durch eine übliche ionenaustauschende Membran 4 begrenzt wird, ist statt der üblichen metallischen Elektrode die Gasdiffusionselektrode 5 eingebaut. Die Gasdiffusionselektrode bekommt ihre Stromzuführung über eine rückwärtige metallische Gitterstruktur 6, welche für eine niederohmige Stromverteilung in die Gasdiffusionselektrode verantwortlich ist und die ihre Stromzuführung über die Strukturelemente 7 erfährt, die wiederum in metallischem Kontakt mit den rückwärtigen Verbindungselementen 8 stehen, welche über die Rückwand 1 mit der externen Stromverteilung (hier nicht dargestellt) in Verbindung stehen. Die Gitterstruktur 6 kann bei Gasdiffusionselektroden 5 mit integriertem metallischem Stromverteilergitter auch entfallen.

Die eigentlichen Gastaschen 20 werden gebildet aus der Gasdiffusionselektrode 5 mit ihrer hydrophoben Rückseite, den Strukturelementen 7, welche die Tasche 20 nicht nur oben und unten, sondern auch seitlich begrenzen, und den rückwärtigen Gasleitblechen 9, welche oben und seitlich gasdicht mit den Strukturelementen 7 verbunden, z.B. verschweißt, werden. Die gasdichte Verbindung erstreckt sich bis zum unteren Ende des seitlichen Zwickels zwischen zur Gasschürze 21 abgeknicktem Gasleitblech 9 und seitlichem Strukturelement (hier nicht gezeigt).

Die so gestaltete Gastaschenelektrode kann als ganzes herausnehmbar gestaltet werden.

Die Gaszufuhr kann über ein flexibles Röhrchen 10, das gasdicht an die unterste Gastasche 20 angebracht und koaxial durch den Zulaufstutzen 2 geführt wird, erfolgen. Das in der untersten Gastasche 20 nicht umgesetzte Gas strömt durch die Gasdurchtrittsöffnung 11, die für alle Gastaschenelemente gleich gestaltet sind und perlt durch Bohrungen 12 der abgewinkelten Schürzen 21 der Gasleitbleche 9 oder gegebenenfalls einen Siphon 18 in die stehende Flüssigkeitssäule, passiert die Bohrungen bzw. Durchbrüche 13 der rückwärtigen Verbindungselemente 8 und wird von der Schürze 21 des jeweils nächst höheren Gasleitbleches 9 aufgefangen und in die zugehörige Gastasche 20' geleitet, wo wiederum ein Teil des Gases umgesetzt wird. An der Elektrode 5 insgesamt nicht umgesetztes Gas wird gemeinsam mit dem aus der Elektrolytkammer abfließenden Elektrolyten 22 durch den Ablaufstutzen 3 abgeführt, gegebenenfalls abgetrennt und als Einsatzgas wiederverwendet.

In einer Variante (siehe Fig. 5) wird das insgesamt nicht umgesetzte Gas über ein Standrohr 24 gemeinsam mit dem Elektrolyten nach unten ausgeschleust, wobei über die Höhe des Standrohres der Differenzdruck über alle Gasdiffusionselektroden 5 gleichermaßen variiert werden kann.

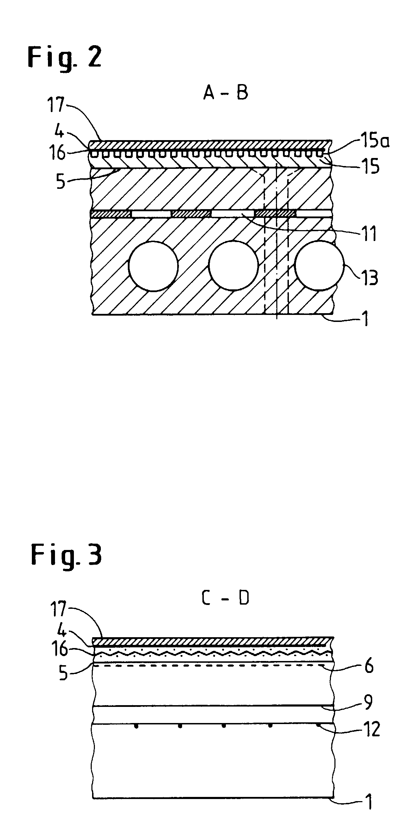

Die Befestigung und Abdichtung der Gasdiffusionselektrode 5 erfolgt an den Strukturelementen 7 mit Hilfe von Klemmleisten 15 (siehe auch Fig. 2), die zunächst nur als Montagehilfe dienen. Sie können deshalb auch als Magnetleisten mit entsprechendem Kunststoffüberzug ausgeführt sein, wobei die zur Ionenaustauschermembran 4 zeigende Seite des Anpreßelementes mit Einkerbungen 15a quer zur Leiste versehen ist, die einen leichten Elektrolytdurchfluß von Kammer zu Kammer des Kathodenraumes 14 ermöglichen sollen.

Ein Abstandsstück 16 aus elastischem elektrolytbeständigem vorzugsweise nichtleitendem Lockergewebe überdeckt den gesamten Kathodenraum; es dient als Turbulenzpromotor und Spacer und führt zu einem vollflächigen Anliegen der Gasdiffusionselektrode 15 am Stromverteilergitter 6. Als flächenhaftes Widerlager dient die jenseits der Membran 4 liegende Elektrode 17, die im Falle einer Alkalihalogenidelektrolyse als Anode 17 auf der Membran 4 aufliegt und nach Zusammenbau der Zelle nicht nur diese mechanische Funktion übernimmt, sondern insbesondere auch die Klemm- bzw. Magnetleisten 15 mit entsprechendem Druck über das zusammengedrückte Abstandsstück 16 auf die Gasdiffusionskathode 5 aufpreßt und diese abdichten hilft. Auf diese Weise wird das Flattern von Membran und Gasdiffusionselektrode sicher vermieden, was deren Lebensdauer entgegenkommt. Außerdem wird hierdurch ein niederohmiger vollflächiger Stromkontakt zwischen Gasdiffusionselektrode 5 und Stromverteilergitter 6 erzielt.

Da im Bereich der Elektrolyteinspeisung 2 unten sicher vermieden werden soll, daß z.B. Sauerstoff als Elektrodengas in den Kathodenspalt gelangt, wird hier der Blasenüberlauf insbesondere wie folgt variiert:

Spalt 11 für den Gasüberlauf wird wie an den übrigen Gastaschen 20 gebildet. Das hier ansetzende Gasleitblech 9 wird jedoch zu einem Syphon 18 umgebogen und durch das rückwärtige Verbindungselement 8a, welches keine Durchbrüche 13 aufweist, zurückgeführt, wobei die Tauchung durch das hier nicht zur Schürze umgebogene Gasleitblech 9 der zugehörigen untersten Gastasche 20 ausgeführt wird. Analog zum Spalt 11 wird hinter dem Gasleitblech 9 ein Spalt 11a gebildet, der das überströmende Gas passieren läßt. Mit dieser Maßnahme wird auch für die unterste Gastasche 20 ein entsprechender Überdruck sichergestellt. Eine kleine Ausgleichsbohrung 19 im rückwärtigen Verbindungselement 8a stellt einen minimalen Elektrolytaustausch im Rückraum sicher, ohne die Zwangsströmung durch den Kathodenraum 14 nennenswert zu stören.

### Beispiel 1

In einem Ausführungsbeispiel zur Simulation der Hydraulik der Gastaschenelektrode wurde ein Modellversuch mit folgenden Parametern gefahren:

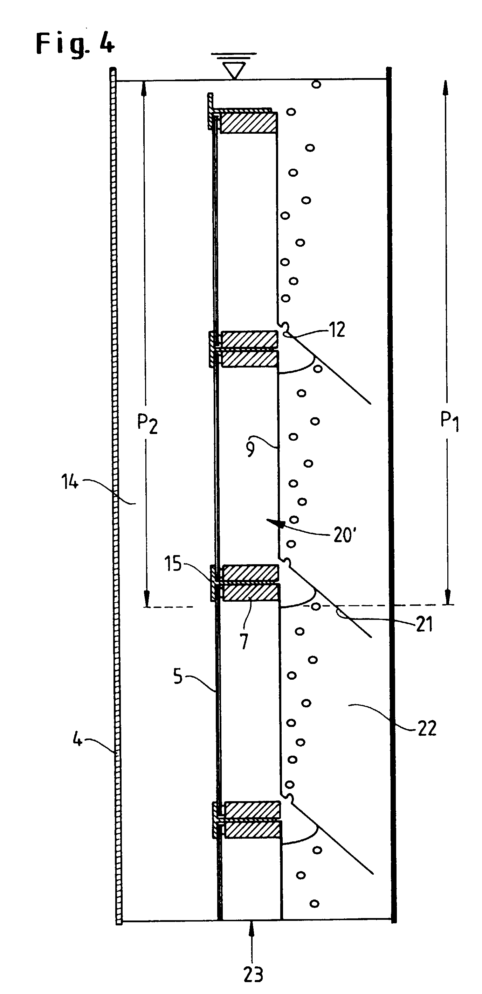

Es wurde ein Modell (entsprechend Fig. 4) aufgebaut mit folgenden Maßen jedoch ohne elektrische Komponenten:
Modellhöhe 30 cm,
Modellbreite 20 cm,
3 Gastaschen à 10 cm Höhe,
Kammertiefe 1 cm,
Schürzenlänge 6 cm,
Schürzenwinkel ca. 30°,
zwei Bohrungen à 0,5 mm im Schürzenknick,
10 cm Abstand von Bohrung zu Bohrung.

Die Bohrungen waren seitlich gegeneinander versetzt von Gasschürze 21 zu Gasschürze 21'.

### Ergebnisse:

Die Versuche wurden mit Druckluft und Sauerstoff gefahren. Mit der gewählten Anordnung konnten pro Bohrung bis zu 30 bis 35 l/h Gas durchgesetzt werden ehe die ersten Gasblasen über den Schürzenrand der freistehenden Gastaschen perlten. Differenzdruckuntersuchungen ergaben für alle drei Kammern die gleichen Differenzdrucke. Die notwendige Sauerstoffmenge pro Quadratmeter Elektrodenfläche bei einer spezifischen Belastung von 3 kA/m² beträgt z.B. 0,63 m_{N} ³/m² x h bzw. bei 75°C Betriebstemperatur ca. 0,8 m³/m² x h (m_{N} ³ = Normkubikmeter).

Bei der am Modell gemessenen Durchtrittsrate von 30 l/h pro Bohrung und unter der Annahme, daß die Elektrolysezelle 1 m hoch baut und 4 Gastaschen à 25 cm Höhe ausreichen, kommt man bei ansonsten gleichen Ausmaßen mit einer Bohrung etwa alle 7 cm aus, da beim Verlassen der untersten Gastasche bereits 0,2 m³/h des Einsatzsauerstoffes an der untersten Elektrode verbraucht sind und der Überlauf der nächst höheren Gastasche ebenfalls um die dort verbrauchten 0,2 m³/h Sauerstoff geringer beaufschlagt wird.

### Beispiel 2

Anwendungsbeispiel für den druckkompensierten Betrieb einer Sauerstoffverzehrkathode

In einem weiteren Ausführungsbeispiel wurde eine elektrochemische Zelle mit folgenden Abmessungen aufgebaut und betrieben:

| | |
|---|---|
| Zellenhöhe | 90 cm |
| Zellenbreite | 22 cm |
| 4 Gastaschen à | 18 x 18 cm² |
| Kammertiefe | 1,5 cm |
| Schürzenlänge | 6 cm |
| Schürzenwinkel | ca. 10° |
| 2 Bohrungen je Schürze | je 1,5 mm in 4 cm Abstand, wechselseitig von Schürze zu Schürze |
| Sauerstoffverzehrkathode | 4 je 18 x 18 cm² freie aktive Flächen Typ ESNS der Firma GDE, Frankfurt, mit 20 % Pt auf C; 15,7 g Pt/m² |
| Membran | Nafion® 980 WX der Firma DuPontSpalt |
| Kathode/Membran | 0,3 cm |
| Anoden | Titan-Steckmetall, mit low-oxygen-Aktivierung durch Haereus, Hanau 4 Anodensegmente 18 x 18 cm², elektrisch voneinander getrennt |

### Ergebnisse:

Bei einer Stromdichte von 3 kA/m², einer Zelltemperatur von 85°C, einer NaCl-Sole-Zulaufkonzentration von 300 g/l, einer Sole-Abreicherung um ca. 90 g/l in der Zelle, einer Natronlauge-Konzentration von 32,5 % und einer Versorgung mit reinem Sauerstoff bei ca. 10 % Überschuß wurden - von oben nach unten - folgende Einzelspannungen in den Zellsegmenten gemesssen:

| | |
|---|---|
| Segment 1 | 2,04 V |
| Segment 2 | 2,05 V |
| Segment 3 | 2,04 V |
| Segment 4 | 2,04 V |

Auch nach einwöchigem Dauerbetrieb war eine Höhenabhängigkeit in den Spannungen der Segmente nicht zu erkennen. Die Abweichungen blieben im Bereich von ≤ 5 mV vom Mittelwert; die Spannungsmessungen waren nur außerordentlich gering verrauscht.

## Patentansprüche

1. Elektrochemische Halbzelle (1) bestehend wenigstens aus einem Elektrodenraum (14) zur Aufnahme eines Elektrolyten (22), einem Gasraum (23) und mindestens einer zwischen Gasraum (23) und Elektrodenraum (14) liegenden Gasdiffusionselektrode (5) als Anode oder Kathode, dadurch gekennzeichnet, daß der Gasraum (23) in zwei oder mehrere kaskadenartig übereinanderliegende Gastaschen (20) und (20') aufgeteilt ist, die voneinander getrennt sind und zum Elektrolyten (22) hin nach unten offen sind, so daß der Druck in jeder Gastasche (20, 20') über die Öffnung zum Elektrolyten (22) in Gleichgewicht zum Druck der Flüssigkeitssäule des Elektrolyten im entsprechenden Teil des vor der Gasdiffusionselektrode (5) liegenden Elektrodenraumes (14) steht, und bei denen eine Gaszu- oder Gasabfuhr über die Öffnungen (11) oder (12) zum Elektrolyten (22) erfolgt.

2. Halbzelle nach Anspruch 1, dadurch gekennzeichnet, daß die Gastaschen (20, 20') über den Elektrolyten (22) jeweils einen fest einstellbaren Differenzdruck zum entsprechenden Elektrodenraum (14) auf der anderen Seite der Gasdiffusionselektrode (5) aufweisen.

3. Halbzelle nach den Ansprüchen 1 bis 2, dadurch gekennzeichnet, daß die Gastaschen (20) auf ihrer Rückseite von Gasleitblechen (9) begrenzt werden, die ihrerseits unterhalb der eigentlichen Gastasche (20) in Gassammelschürzen (21) als Öffnungen (11) zum Elektrolyten (22) auslaufen, wobei die Gassammelschürzen (21) zur Aufnahme der im Elektrolyten aufsteigenden Gasblasen dienen und diese das Elektrodengas der nächst höherliegenden Gastasche (20') zuleiten.

4. Halbzelle nach den Ansprüchen 1 bis 3, dadurch gekennzeichnet, daß die Gassammelschürzen (21) bis dicht vor die Rückwand der Halbzelle (1) geführt sind.

5. Halbzelle nach den Ansprüchen 1 bis 4, dadurch gekennzeichnet, daß die Gassammelschürzen (21) Gasdurchtrittsöffnungen (12) aufweisen unterhalb der Unterkante der jeweiligen Gastasche (20) oder im oberen Bereich der Gassammelschürze (21) für eine kontrollierte Abgabe von Überschußgas an die nächst höhergelegene Gastasche (20').

6. Halbzelle nach Anspruch 5, dadurch gekennzeichnet, daß die Gasdurchtrittsöffnungen (12) (zur Kompensation eines hydraulischen Druckverlustes im Elektrodenraum) beginnend mit der Gassammelschürze der untersten Gastasche (20) steigend oder fallend versetzt zur Unterkante der jeweiligen Gastasche (20) angeordnet sind.

7. Halbzelle nach Anspruch 5, dadurch gekennzeichnet, daß die Gasdurchtrittsöffnungen (12) jeweils in Bereichen zu Gruppen nebeneinander angeordnet sind, wobei bei übereinanderliegenden Gastaschen (20, 20') Bereiche einer Gassammelschürze (21) mit Durchtrittsöffnungen (12) immer über Bereichen ohne Gasdurchtrittsöffnungen (12) in der jeweils darüberliegenden Gassammelschürze (21) angeordnet sind und umgekehrt.

8. Halbzelle nach Anspruch 5, dadurch gekennzeichnet, daß Bereiche mit Gasdurchtrittsöffnungen (12) einer Gastasche (20) in der Gassammelschürze (21) von Bereichen ohne Gasdurchtrittsöffnungen durch Zwickel zwischen Gassammelschürze (21) und Gasleitblech (9) getrennt sind, so daß ein Gasaustausch im Gasraum (23) gefördert wird.

9. Halbzelle nach den Ansprüchen 1 bis 8, dadurch gekennzeichnet, daß die Gassammelschürze (21) an der untersten Gastasche (20) als Siphon (18) ausgeführt ist, der es ermöglicht, daß die Druckkompensation ungestört von in die Halbzelle (1) einströmendem Elektrolyten (22) erfolgt.

10. Halbzelle nach den Ansprüchen 1 bis 9, dadurch gekennzeichnet, daß die Höhe der jeweiligen Gastasche (20) von 1 bis 50 cm, vorzugsweise von 5 bis 30 cm beträgt.

11. Halbzelle nach den Ansprüchen 1 bis 10, dadurch gekennzeichnet, daß die Zelle über eine einzige Gaszuführung in die unterste Gastasche (20) bespeist ist, der jeweilige Gasüberschuß von Gastasche (20) zu Gastasche (20') von unten nach oben weitergegeben und der nach der obersten Gastasche verbleibende Gasüberschuß am Kopf der Zelle abgegeben ist.

12. Halbzelle nach den Ansprüchen 1-11, dadurch gekennzeichnet, daß durch hydraulische Trennung von Elektrodenraum (14) und Elektrolytraum (22) der Differenzdruck zwischen den Bereichen vor und hinter der Gasdiffusionselektrode (5) frei einstellbar ist.

13. Halbzelle nach den Ansprüchen 1 bis 12, dadurch gekennzeichnet, daß die Gaszuführung (10) in die unterste Gastasche (20) koaxial über einen Stutzen (2) gemeinsam mit der Elektrolytzuführung in den Elektrodenraum (14) erfolgt und die Ableitung des Überschußgases zusammen mit dem Elektrolyten nach oben durch einen Ablaufstutzen (3) erfolgt.

14. Halbzelle nach den Ansprüchen 1 bis 13, dadurch gekennzeichnet, daß der Elektrodenraum (14) oben mit dem Elektrolytraum hinter den Gastaschen (20) hydraulisch verbunden ist, in diesen überströmt und die Ableitung des Überschußgases gemeinsam mit dem Elektrolyten (22) über ein Standrohr (24) im Bereich hinter den Gastaschen (20) nach unten oder über einen seitlich angebrachten Stutzen mit auf gleicher Höhe liegendem Gas-Flüssigkeittrenner zur Seite erfolgt.

15. Halbzelle nach Anspruch 14, dadurch gekennzeichnet, daß über die Höhe des Standrohres (24) im Bereich hinter den Gastaschen (20) bzw. über die Höhenlage des seitlich angebrachten Stutzens der Flüssigkeitspegel des Elektrolyten (22) gegenüber dem Pegel des Elektrolyten im Elektrodenraum (14) unterschiedlich einstellbar ist und damit für alle Gastaschen (20, 20') der Differenzdruck zwischen Gas- (23) und Elektrodenraum (14) gleichermaßen variierbar ist.

16. Halbzelle nach den Ansprüchen 1 bis 15, dadurch gekennzeichnet, daß die Stromzuführung zur Gasdiffusionselektrode (5) über deren Haltevorrichtung (7) erfolgt, die wiederum niederohmig mit der Rückseite der Zelle zur externen Stromquelle verbunden ist, wobei zwischen den Haltevorrichtungen (7) eine metallische Gitterstruktur (6), an der elektrolytseitig die Gasdiffusionselektrode (5) anliegt, für kurze Stromwege sorgt.

17. Halbzelle nach Anspruch 16, dadurch gekennzeichnet, daß die niederohmige Verbindung (8) zur Rückseite der Zelle mit Durchbrüchen bzw. Löchern (13, 19) versehen ist, die einerseits einen hydrostatischen Druckausgleich des Elektrolyten (22) im Rückraum des Elektrodenraumes (14) und andererseits eine Passage der weitergeleiteten Gasblasen des Elektrodengases ermöglichen.

18. Halbzelle nach Anspruch 16, dadurch gekennzeichnet, daß die unterste niederohmige Verbindung zur Rückseite der Zelle eine kleine Ausgleichsbohrung enthält, die eine Elektrolytdurchmischung im Rückraum des Elektrodenraumes ermöglicht, ohne eine gezielte Hauptströmung des Elektrolyten (22) durch den Elektrodenraum (14) nennenswert zu beeinflussen.

19. Halbzelle nach Anspruch 1 bis 18, dadurch gekennzeichnet, daß die Gasdiffusionselektrode (5) auswechselbar ist, wobei alle übrigen Strukturen der Halbzelle (1) erhalten bleiben.

## Claims

1. Electrochemical half-cell (1), consisting of at least one electrode chamber (14) for accommodating an electrolyte (22), a gas chamber (23) and at least one gas-diffusion electrode (5) as anode or cathode lying between gas chamber (23) and electrode chamber (14), characterised in that the gas chamber (23) is divided into two or more gas pockets (20) and (20') superimposed on one another after the manner of a cascade, which are separate from one another and are open towards the electrolyte (22) in a downward direction, so that the pressure in each gas pocket (20, 20') across the opening to the electrolyte (22) is in equilibrium with the pressure of the liquid column of the electrolyte in the corresponding part of the electrode chamber (14) lying before the gas-diffusion electrode (5), and with which a gas supply or gas discharge takes place across the openings (11) or (12) to the electrolyte (22).

2. Half-cell according to claim 1, characterised in that the gas pockets (20, 20') above the electrolytes (22) each exhibit a firmly adjustable differential pressure relative to the corresponding electrode chamber (14) on the other side of the gas-diffusion electrode (5).

3. Half-cell according to claims 1 to 2, characterised in that the gas pockets (20) are bounded on their rear side by gas baffles (9) which for their part end below the actual gas pocket (20) in gas collecting hoods (21) as openings (11) to the electrolyte (22), wherein the gas collecting hoods (21) serve for accommodating the gas bubbles rising in the electrolyte and the latter pass the electrode gas to the next highest gas pocket (20').

4. Half-cell according to claims 1 to 3, characterised in that the gas collecting hoods (21) are arranged up to just before the rear wall of the half-cell (1).

5. Half-cell according to claims 1 to 4, characterised in that the gas collecting hoods (21) possess gas passage openings (12) below the lower edge of the respective gas pocket (20) or in the upper area of the gas collecting hood (21) for a controlled delivery of excess gas to the next highest gas pocket (20').

6. Half-cell according to claim 5, characterised in that the gas passage openings (12) are (for the compensation of a hydraulic pressure loss in the electrode chamber) beginning with the gas collecting hood of the bottommost gas pocket (20) arranged offset rising or falling relative to the bottom edge of the respective gas pocket (20).

7. Half-cell according to claim 5, characterised in that the gas passage openings (12) are in particular areas arranged in groups next to one another, wherein with superimposed gas pockets (20, 20') areas of a gas collecting hood (21) with passage openings (12) are always arranged above areas without gas passage openings (12) in the particular gas collecting hood (21) lying above them and vice versa.

8. Half-cell according to claim 5, characterised in that areas with gas passage openings (12) of a gas pocket (20) in the gas collecting hood (21) are separated from areas without gas passage openings by gussets between gas collecting hood (21) and gas baffle (9), so that a gas exchange is promoted in the gas chamber (23).

9. Half-cell according to claims 1 to 8, characterised in that the gas collecting hood (21) is constructed at the bottommost gas pocket (20) as a siphon (18) which makes it possible for the pressure compensation to take place undisturbed by electrolytes (22) flowing into the half-cell (1).

10. Half-cell according to claims 1 to 9, characterised in that the height of the respective gas pocket (20) is from 1 to 50 cm, preferably from 5 to 30 cm.

11. Half-cell according to claims 1 to 10, characterised in that the cell is fed via a single gas supply into the bottommost gas pocket (20), the respective gas surplus is transferred from gas pocket (20) to gas pocket (20') from bottom to top and the gas surplus remaining after the topmost gas pocket is carried away at the head of the cell.

12. Half-cell according to claims 1 to 11, characterised in that the differential pressure between the areas before and behind the gas-diffusion electrode (5) is freely adjustable by hydraulic separation of electrode chamber (14) and electrolyte chamber (22).

13. Half-cell according to claims 1 to 12, characterised in that the supply of gas (10) into the bottommost gas pocket (20) takes place coaxially via a nozzle (2) jointly with the supply of electrolyte into the electrode chamber (14) and the draining of the excess gas takes place together with the electrolyte upwards through an outlet nozzle (3).

14. Half-cell according to claims 1 to 13, characterised in that the electrode chamber (14) is connected at the top hydraulically with the electrolyte chamber behind the gas pockets (20), overflows into the latter and the draining of the excess gas takes place jointly with the electrolyte (22) either downwards via a standpipe (24) in the area behind the gas pockets (20) or to the side via a laterally arranged nozzle through a gas-liquid separator lying at the same level.

15. Half-cell according to claim 14, characterised in that through the height of the standpipe (24) in the area behind the gas pockets (20) or through the level of the laterally attached nozzle the liquid level of the electrolyte (22) is settable differently compared with the level of the electrolyte in the electrode chamber (14) and hence the differential pressure between gas chamber (23) and electrode chamber (14) is variable equally for all the gas pockets (20, 20').

16. Half-cell according to claims 1 to 15, characterised in that the supply of current to the gas-diffusion electrode (5) takes place by means of its holding device (7), which is connected in turn with low resistance to the rear side of the cell leading to the external power source, wherein between the holding devices (7) a metallic grid structure (6), to which the gas-diffusion electrode (5) is connected at the electrolyte side, ensures short current paths.

17. Half-cell according to claim 16, characterised in that the low-resistance connection (8) to the rear side of the cell is provided with openings or holes (13, 19), which permit on the one hand a hydrostatic pressure equalization of the electrolyte (22) in the rear area of the electrode chamber (14) and on the other a passage for the transferred gas bubbles of the electrode gas.

18. Half-cell according to claim 16, characterised in that the bottommost low-resistance connection to the rear side of the cell contains a small equalization bore which permits an electrolyte intermixture in the rear area of the electrode chamber, without affecting significantly a deliberate main flow of the electrolyte (22) through the electrode chamber (14).

19. Half-cell according to claims 1 to 18, characterised in that the gas-diffusion electrode (5) is exchangeable, while all the remaining structures of the half-cell (1) are retained.

## Revendications

1. Demi-cellule électrochimique (1), comprenant au moins une chambre à électrodes (14) pour recevoir un électrolyte (22), une chambre de gaz (23) et au moins une électrode à diffusion gazeuse (5) faisant office d'anode ou de cathode, disposée entre la chambre de gaz (23) et la chambre de cathode (14), caractérisée en ce que la chambre de gaz (23) est subdivisée en deux ou plusieurs poches de gaz (20) et (20') disposées les unes au-dessus des autres à la manière d'une cascade, lesquelles sont séparées les unes des autres et sont ouvertes vers le bas en direction de l'électrolyte (22), de sorte que la pression dans chaque poche de gaz (20, 20') au-dessus de l'ouverture vers l'électrolyte (22) se trouve en équilibre par rapport à la pression de la colonne de liquide de l'électrolyte dans la partie correspondante de la chambre à électrodes (14) située devant l'électrode à diffusion gazeuse (5), et dans lesquelles a lieu une alimentation ou une évacuation des gaz via les ouvertures (11) ou (12) vers l'électrolyte (22).

2. Demi-cellule selon la revendication 1, caractérisée en ce que les poches de gaz (20, 20') présentent au-dessus de l'électrolyte (22) respectivement une pression différentielle susceptible d'être réglée de manière fixe vis-à-vis de la chambre à électrodes correspondante (14) de l'autre côté de l'électrode à diffusion gazeuse (5).

3. Demi-cellule selon l'une ou l'autre des revendications 1 et 2, caractérisée en ce que les poches de gaz (20) sont limitées sur leurs côté postérieur par des tôles déflectrices de gaz (9), lesquelles se terminent de leur côté au-dessous de la poche de gaz proprement dite (20) dans des jupes collectrices de gaz (21) en tant qu'ouvertures (11) vers l'électrolyte (22), les jupes collectrices de gaz (21) servant à la réception des bulles de gaz qui montent dans l'électrolyte et celles-ci amènent le gaz d'électrode à la poche de gaz (20') suivante au-dessus.

4. Demi-cellule selon les revendications 1 à 3, caractérisée en ce que les jupes collectrices de gaz (21) sont menées jusqu'à courte distance devant la paroi arrière de la demi-cellule (1).

5. Demi-cellule selon les revendications 1 à 4, caractérisée en ce que les jupes collectrices de gaz (21) présentent des ouvertures de traversée de gaz (12) au-dessous de l'arête inférieure de la poche de gaz respective (20), ou bien dans la région supérieure des jupes collectrices de gaz (21) pour une fourniture commandée du gaz en excès vers la poche de gaz suivante au-dessus (20').

6. Demi-cellule selon la revendication 5, caractérisée en ce que les ouvertures de traversée de gaz (12) (pour compensation d'une perte de pression hydraulique dans la chambre à électrodes) sont agencées, en commençant par la jupe collectrice de gaz de la poche de gaz la plus basse (20) en montant ou en descendant et en décalage vis-à-vis de la l'arête inférieure de la poche de gaz respective (20).

7. Demi-cellule selon la revendication 5, caractérisée en ce que les ouvertures de traversée de gaz (12) sont respectivement agencées les unes à côté des autres dans des zones en formant des groupes, et dans les poches de gaz (20, 20') situées les unes au-dessus des autres, les zones d'une jupe collectrice de gaz (21) pourvues d'ouvertures de traversée (12) sont toujours agencées au-dessus de zones sans ouverture de traversée de gaz (12) dans la jupe collectrice de gaz (21) agencée respectivement au-dessus, et inversement.

8. Demi-cellule selon la revendication 5, caractérisée en ce que les zones pourvues d'ouvertures de traversée de gaz (12) d'une poche de gaz (20) dans la jupe collectrice de gaz (21) sont séparées de zones sans ouvertures de traversée de gaz au moyen d'une jonction entre la jupe collectrice de gaz (21) et la tôle déflectrice de gaz (9), de sorte que l'on favorise un échange de gaz dans la chambre de gaz (23).

9. Demi-cellule selon l'une des revendications 1 à 8, caractérisée en ce que la jupe collectrice de gaz (21) au niveau de la poche de gaz la plus basse (20) est réalisée à la manière d'un siphon (18), qui permet que la compensation de pression ait lieu sans dérangement par l'électrolyte (22) qui pénètre dans la demi-cellule.

10. Demi-cellule selon l'une des revendications 1 à 9, caractérisée en ce que la hauteur de la poche de gaz respective (20) s'élève de 1 à 50 cm, de préférence de 5 à 30 cm.

11. Demi-cellule selon l'une des revendications 1 à 10, caractérisée en ce que la cellule est alimentée via une alimentation de gaz unique dans la poche de gaz la plus basse (20), l'excès de gaz respectif étant transmis d'une poche de gaz (20) à la suivante (20') du bas vers le haut, et l'excès de gaz qui reste après la poche de gaz la plus haute est évacué au sommet de la cellule.

12. Demi-cellule selon l'une des revendications 1 à 11, caractérisée en ce que, par séparation hydraulique de la chambre à électrodes (14) et de la chambre à électrolyte (22) on peut régler librement la pression différentielle entre les régions devant et derrière l'électrode à diffusion gazeuse (5).

13. Demi-cellule selon l'une des revendications 1 à 12, caractérisée en ce que l'amenée de gaz (10) dans la poche de gaz la plus basse (20) a lieu de façon coaxiale au moyen d'un manchon (2) conjointement avec l'amenée d'électrolyte dans la chambre à électrodes (14), et l'évacuation du gaz en excès a lieu vers le haut conjointement avec l'électrolyte via un manchon d'évacuation (3).

14. Demi-cellule selon l'une des revendications 1 à 13, caractérisée en ce que la chambre à électrodes (14) est reliée de façon hydraulique en haut avec la chambre à électrolyte derrière les poches de gaz (20), en ce que l'écoulement s'effectue vers celle-ci et en ce que l'évacuation du gaz en excès a lieu conjointement avec l'électrolyte (22) vers le bas via un tube vertical (24) dans la zone derrière les poches de gaz (20), ou sur le côté via un manchon agencé latéralement, avec un séparateur à liquide situé à la même hauteur.

15. Demi-cellule selon la revendication 14, caractérisée en ce que, au moyen de la hauteur du tube vertical (24) dans la région derrière les poches de gaz (20), ou au moyen de la position en hauteur du manchon disposé latéralement, on peut régler de façon différente le niveau du liquide de l'électrolyte (22) vis-à-vis du niveau de l'électrolyte dans la chambre à électrodes (14), et l'on peut ainsi faire varier de façon égale pour toutes les poches de gaz (20, 20') la pression différentielle entre la chambre de gaz (23) et la chambre à électrodes (14).

16. Demi-cellule selon l'une des revendications 1 à 15, caractérisée en ce que l'amenée de courant vers les électrodes à diffusion gazeuse (5) s'effectue au moyen de leur dispositif de maintien (7), lequel est à son tour relié avec faible résistance à la face arrière de la cellule vers la source de courant externe, et il est prévu entre les dispositifs de maintien (7) une structure grillagée métallique (6), qui assure des trajets courts pour le courant et contre laquelle est appliquée du côté électrolyte l'électrode à diffusion gazeuse (5).

17. Demi-cellule selon la revendication 16, caractérisée en ce que la jonction à faible résistance (8) vers la face arrière de la cellule est pourvue de traversées ou de perçages (13, 19) qui permettent d'une part une compensation de pression hydrostatique de l'électrolyte (22) dans la chambre postérieure de la chambre à électrodes (14), et d'autre part un passage des bulles de gaz transmises du gaz d'électrode.

18. Demi-cellule selon la revendication 16, caractérisée en ce que la jonction à faible résistance la plus basse vers la face arrière de la cellule comporte un petit perçage de compensation qui permet un mélange de l'électrolyte dans la chambre arrière de la chambre à électrodes, sans influencer de façon notable un écoulement principal désiré de l'électrolyte (22) à travers la chambre à électrodes (14).

19. Demi-cellule selon l'une des revendications 1 à 18, caractérisée en ce que l'électrode à diffusion gazeuse (5) est interchangeable, tandis que toutes les autres structures de la demi-cellule (1) restent conservées.
